# EUROPEAN PATENT SPECIFICATION

(11) **EP 3 517 321 B1**
(45) Date of publication and mention of the grant of the patent: **25.11.2020**
(21) Application number: 18210137.8
(22) Date of filing: 04.12.2018
(51) Int. Cl.: B60C 11/03, B60C 11/13

(54) **TYRE**
REIFEN
PNEUMATIQUE

(30) Priority: 26.01.2018 JP 2018011768
(43) Date of publication of application: 31.07.2019
(73) Proprietor: Sumitomo Rubber Industries, Ltd., Kobe-shi, Hyogo-ken 651-0072 (JP)
(72) Inventor: NAKAJIMA, Koichi, Kobe-shi, Hyogo 651-0072 (JP)
(74) Representative: Manitz Finsterwald Patent- und Rechtsanwaltspartnerschaft mbB

(56) References cited:
- EP-A1- 1 021 306
- JP-A- H05 338 412
- JP-A- H09 142 106
- JP-A- 2016 124 442

## Description

### Technical Field

The present invention relates to a tyre having a tread portion provided with main grooves.

### Background Art

For example, Japanese Unexamined Patent Application No. H05-338412 has disclosed a tyre having a tread portion provided with main grooves. Each of the main groove mentioned above has groove wall surfaces extending obliquely in a direction so that a groove width thereof decreases from a groove bottom thereof toward a tread face thereof. The main grooves configured as such are advantageous for maintaining a drainage property after the tread portion is worn. Respective tyres are disclosed in EP 1 021 306 A1, JP H09 142106 A or JP 2016 124442 A.

### Summary of the Invention

However, there has been a problem with the tyre described above that uneven wear tends to occur on a ground contacting surface positioned on an outer side in a tyre radial direction of the groove wall surfaces.

The present invention was made in view of the above, and a primary object thereof is to provide a tyre capable of exerting excellent wet performance over a long period of time while suppressing the uneven wear of the ground contacting surface of the tread portion.

In one aspect of the present invention, a tyre comprises a tread portion comprising a ground contacting surface and at least one main groove recessed from the ground contacting surface and extending continuously in a tyre circumferential direction, wherein at least one of the groove walls of the main groove is provided with a recessed portion recessed outwardly in a groove width direction from a corresponding groove edge of the main groove on the ground contacting surface, and the ground contacting surface has a protruding portion in a region where the recessed portion is projected outwardly in a tyre radial direction.

In another aspect of the invention, it is preferred that the recessed portion is provided in each of the groove walls of the main groove.

In another aspect of the invention, it is preferred that the recessed portion includes a first recessed portion in which a recess amount from the groove edge gradually decreases toward both sides in the tyre circumferential direction from a deepest portion recessed most outwardly in the groove width direction.

In another aspect of the invention, it is preferred that the recessed portion includes a second recessed portion in which a recess amount from the groove edge is constant in the tyre circumferential direction.

In another aspect of the invention, it is preferred that the recessed portion includes a first recessed portion in which a recess amount from the groove edge gradually decreases toward both sides in the tyre circumferential direction from a deepest portion recessed most outwardly in the groove width direction, and the protruding portion is provided in a region where the first recessed portion is projected outwardly in the tyre radial direction.

In another aspect of the invention, it is preferred that a plurality of the protruding portions is respectively provided in a plurality of the regions.

In another aspect of the invention, it is preferred that the protruding portions are arranged in the tyre circumferential direction.

According to the invention, a width in a tyre axial direction of the or each protruding portion is smaller than a groove width of the main groove.

In another aspect of the invention, it is preferred that a width in a tyre axial direction of the or each protruding portion gradually decreases toward at least one side in the tyre circumferential direction.

### Brief Description of the Drawings

Fig. 1 is a lateral cross-sectional view of a tread portion of a tyre according to an embodiment of the present invention.
Fig. 2 is an enlarged cross-sectional view of one of shoulder main grooves and one of crown main grooves of Fig. 1.
Fig. 3 is an enlarged plan view of the shoulder main groove and the crown main groove of Fig. 2.
Fig. 4A is a cross-sectional view taken along A-A line of Fig. 3.
Fig. 4B is a cross-sectional view taken along B-B line of Fig. 3.
Fig. 5A is an enlarged plan view of one of protruding portions of Fig. 3.
Fig. 5B is a cross-sectional view taken along C-C line of Fig. 5A.

### Description of the Preferred Embodiment

An embodiment of the present invention will now be described below in detail in conjunction with accompanying drawings.

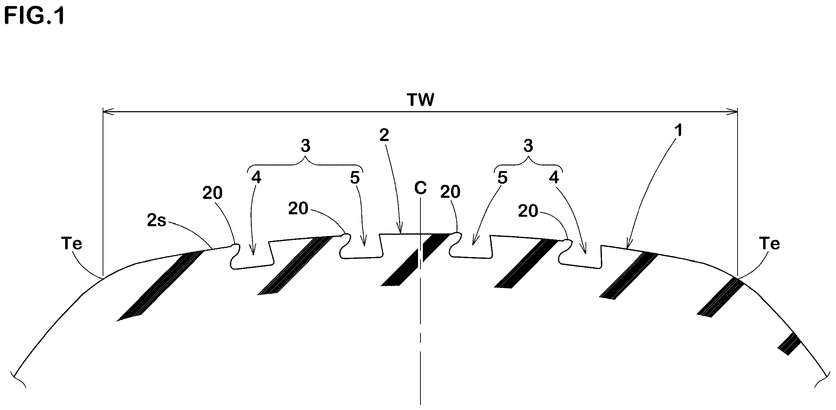

Fig. 1 is a lateral cross-sectional view of a tread portion 2 of a tyre 1 in this embodiment. Note that Fig. 1 is a meridian section passing through a tyre rotational axis of the tyre 1 in a standard state. The tyre 1 in this embodiment is suitably used as a pneumatic tyre for a passenger car, for example. However, it is not limited to such an embodiment, and the tyre 1 of the present invention may be used as a tyre for heavy load.

In a case of a pneumatic tyre, the "standard state" is a state in which the tyre is mounted on a standard rim, inflated to a standard inner pressure, and loaded with no tyre load. Hereinafter, dimensions and the like of various parts of the tyre are those measured under the standard state, unless otherwise noted.

The "standard rim" is a wheel rim specified for the concerned tyre by a standard included in a standardization system on which the tyre is based, for example, the "normal wheel rim" in JATMA, "Design Rim" in TRA, and "Measuring Rim" in ETRTO.

The "standard inner pressure" is air pressure specified for the concerned tyre by a standard included in a standardization system on which the tyre is based, for example, the "maximum air pressure" in JATMA, maximum value listed in the "TIRE LOAD LIMITS AT VARIOUS COLD INFLATION PRESSURES" table in TRA, and "INFLATION PRESSURE" in ETRTO.

As shown in Fig. 1, the tread portion 2 is provided with a ground contacting surface (2s) and at least one main groove 3 recessed from the ground contacting surface (2s) and extending continuously in a tyre circumferential direction. In this embodiment, in each half in a tyre axial direction of the tread portion, a shoulder main groove 4 and a crown main groove 5 adjacent to each other in the tyre axial direction are respectively provided between a tyre equator (c) and a respective one of tread edges (Te). Each of the shoulder main grooves 4 is arranged closest to a respective one of the tread edges (Te), for example. Each of the crown main grooves 5 is provided between a respective one of the shoulder main grooves 4 and the tyre equator (c). Thereby, the tread portion 2 in this embodiment is provided with four main grooves 3. However, the present invention is not limited to such an embodiment.

The tread edges (Te) are defined as outermost ground contacting positions in the tyre axial direction when the tyre 1 in the standard state is in contact with a flat surface with zero camber angles by being loaded with a standard tyre load.

The "standard tyre load" is a tyre load specified for the concerned tyre by a standard included in a standardization system on which the tyre is based, for example, the "maximum load capacity" in JATMA, maximum value listed in "TIRE LOAD LIMITS AT VARIOUS COLD INFLATION PRESSURES" table in TRA, and "LOAD CAPACITY" in ETRTO.

It is preferred that a groove width of each of the main grooves 3 is in the range of from 3.0% to 6.0% of a tread width (TW), for example. Note that, in this specification, unless otherwise noted, the groove width of the main groove means a length between groove edges thereof on a ground contacting surface of the tread portion 2. The tread width (TW) is a distance in the tyre axial direction between one of the tread edges (Te) and the other one of the tread edges (Te) of the tyre 1 in the standard state. In a case of a pneumatic tyre for a passenger car, it is preferred that a groove depth of each of the main grooves 3 is in the range of from 5 to 10 mm, for example.

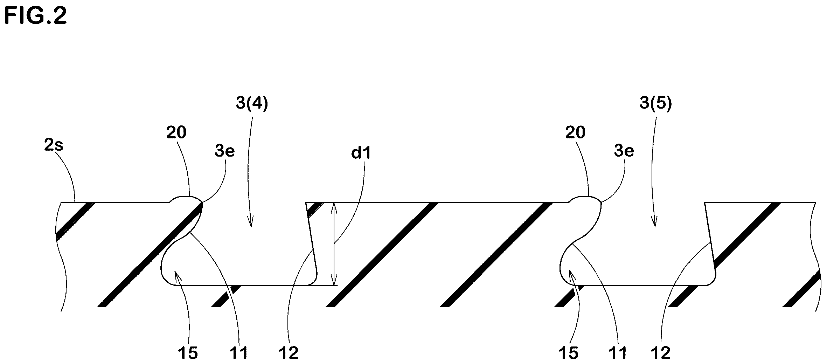

Fig. 2 is an enlarged cross-sectional view of one of the shoulder main grooves 4 and its adjacent one of the crown main grooves 5 as a drawing for explaining the configuration of the main grooves 3. As shown in Fig. 2, at least one of groove walls of each of the main grooves 3 is provided with a recessed portion 15. The recessed portion 15 is recessed outwardly in the groove width direction from a groove edge (3e) of a respective one of the main grooves 3 on the ground contacting surface (2s). The recessed portion 15 may be configured in various forms in which, for example, a depth thereof changes in the tyre circumferential direction, a depth thereof is constant in the tyre circumferential direction, or the like. Even when the tread portion 2 is worn, the recessed portions 15 ensure an opening area of each of the main grooves 3 at the ground contacting surface (2s) of the tread portion 2, therefore, excellent wet performance is exerted over a long period of time.

The ground contacting surface (2s) of the tread portion 2 has protruding portions 20 each in a region where a respective one of the recessed portions 15 is projected outwardly in the tyre radial direction onto the ground contacting surface. The protruding portions 20 configured as such moderately increase ground contact pressure applied to the regions described above, therefore, it is possible that the ground contact pressure applied to the above regions and the other regions are made uniform, eventually. Thereby, the uneven wear of the ground contacting surface (2s) of the tread portion 2 is suppressed.

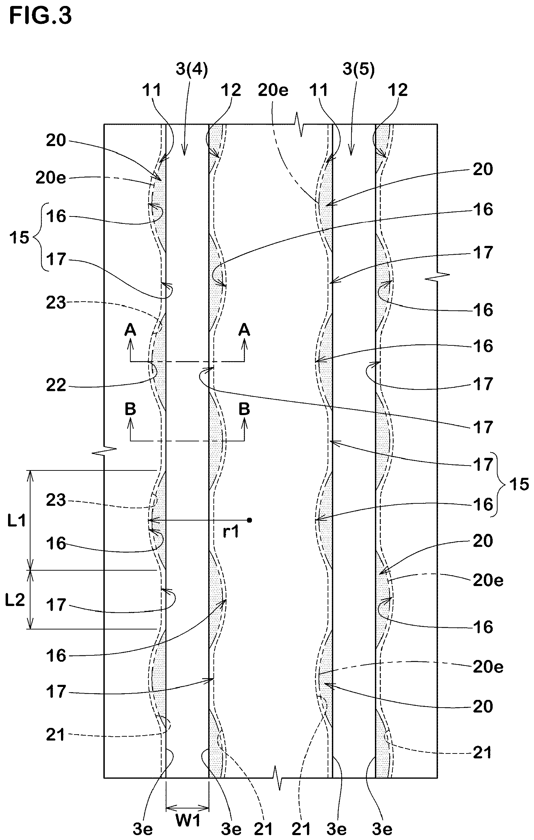

Fig. 3 is an enlarged plan view of one of the shoulder main grooves 4 and its adjacent one of the crown main grooves 5 as a drawing showing an embodiment of the recessed portions 15. In Fig. 3, each of the groove edges (3e) of the main grooves 3 is indicated by a solid line and each of contours 21 of the groove walls thereof is indicated by a broken line for ease of understanding the configuration of the recessed portions 15. Further, edges (20e) of the protruding portions 20 are indicated by a two-dot line. Furthermore, the protruding portions 20 are shaded. As shown in Fig. 3, the recessed portions 15 in this embodiment are provided in both of the groove walls of each of the main grooves. Each of the main grooves 3 includes a first groove wall 11 which is a groove wall positioned on a side of a respective one of the tread edges (Te) and a second groove wall 12 which is a groove wall positioned on a side of the tyre equator (c), for example. The recessed portions 15 provided in each of the groove walls include first recessed portions 16 and second recessed portions 17, for example.

It is preferred that each of the first recessed portions 16 has a recess amount gradually decreasing toward both sides in the tyre circumferential direction from a deepest portion 22 recessed most outwardly in the groove width direction, for example. Thereby, on both sides in the tyre circumferential direction of each of the deepest portions 22, rigidity of land regions divided by the main grooves 3 is secured, therefore, it is possible that a part on a side of each of the groove edges of land regions divided by the main grooves 3 is suppressed from collapsing toward a groove center of a respective one of the main grooves 3. Further, the first recessed portions 16 smoothly changes the rigidity of the land regions in the tyre circumferential direction, therefore, local deformation of the parts of the land regions near the groove edges is suppressed. Thereby, excellent steering stability is obtained. Furthermore, it is possible that the first recessed portions 16 decrease a penetration width of each of the main grooves 3, therefore, they are helpful for decreasing air column resonance sound of the main grooves 3 during running.

In general, main grooves extending continuously in the tyre circumferential direction discharge water to the rear side in the tyre running direction during running on a wet road surface, but when the amount of water on the road surface is large, they tend to push a part of the water to the front side in the tyre running direction. In the main grooves 3 in this embodiment, it is possible that the first recessed portions 16 described above push a part of the water to the front side in the tyre running direction and to the outer side in the tyre axial direction, therefore, the displaced water is consequently suppressed from getting into the gap between the tread portion 2 and the road surface. Thereby, it is possible that the first recessed portions 16 described above effectively suppress the hydroplaning phenomenon as compared with the recessed portions having a constant recess amount in the tyre circumferential direction.

Each of the first recessed portions 16 has a contour portion 23 smoothly curved and recessed in a cross section passing through a respective one of the deepest portions 22 and taken in parallel with the ground contacting surface of the tread portion 2, for example. The first recessed portions 16 configured as such improve mold releasability which is easiness of taking out ribs for forming the main grooves of a vulcanization mold from the tread portion 2 at the time of vulcanization molding.

It is preferred that, in each of the first recessed portions 16, a curvature of an arcuate contour portion thereof in a cross section taken in parallel with the ground contacting surface of the tread portion 2 gradually increases toward the inner side in the tyre radial direction. It is possible that the first recessed portions 16 configured as such secure large groove volume of the main grooves 3 while suppressing deformation of the parts of the land regions near the groove edges.

It is preferred that a radius of curvature (r1) of each of the contour portions 23 is in the range of from 1.5 to 3.0 times a groove width (w1) of each of the main grooves 3, for example. It is preferred that a length (L1) in the tyre circumferential direction of each of the first recessed portions 16 is in the range of from 2.0 to 3.0 times the groove width (w1) of each of the main grooves 3, for example.

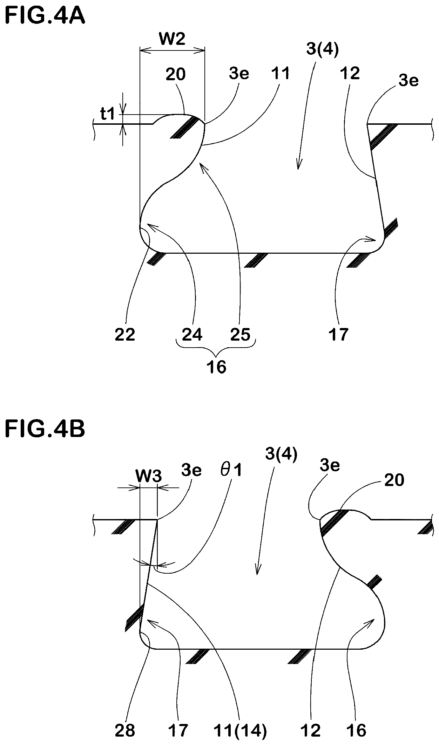

Fig. 4A is a cross-sectional view taken along A-A line of Fig. 3 and corresponds to a lateral cross-sectional view of one of the first recessed portions 16 provided in one of the first groove walls 11 taken so as to pass through the deepest portion 22 thereof. As shown in Fig. 4A, it is preferred that each of the first recessed portions 16 is provided on a side of a groove bottom of a respective one of the groove walls of the main grooves 3.

Each of the first recessed portions 16 in this embodiment includes a concave surface portion 24 recessed outwardly in the groove width direction, and a convex surface portion 25 connected with the concave surface portion 24 on the outer side thereof in the tyre radial direction and convex toward a side of a groove center line of a respective one of the main grooves 3, for example. It is preferred that each of the concave surface portion 24 and the convex surface portion 25 is curved in a smooth arc shape. In another embodiment, each of the first recessed portions 16 may have a flat surface formed between the deepest portion 22 thereof and its adjacent one of the groove edges (3e), for example.

In each of the first recessed portions 16 in the lateral cross-sectional view passing through a respective one of the deepest portions 22, it is preferred that the recess amount gradually decreases radially outwardly from the deepest portion 22. A maximum recess amount (w2) of each of the first recessed portions 16 is preferably not less than 0.20 times, more preferably not less than 0.40 times, and preferably not more than 0.80 times, more preferably not more than 0.60 times the groove width (w1) (shown in Fig. 3), which is the length between the groove edges of each of the main grooves 3. It is possible that the first recessed portions 16 configured as such exert excellent wet performance while suppressing the uneven wear of the ground contacting surface (2s). Note that the maximum recess amount (w2) of each of the first recessed portions 16 in this embodiment corresponds to a maximum recess amount of each of the recessed portions 15.

As shown in Fig. 3, each of the second recessed portions 17 in this embodiment has the recess amount constant in the tyre circumferential direction from a respective one of the groove edges (3e). It is possible that the second recessed portions 17 configured as such together with the first recessed portions 16 improve the mold releasability and the wet performance.

It is preferred that each of the second recessed portions 17 has a length in the tyre circumferential direction smaller than that of each of the first recessed portions 16, for example. It is preferred that a length (L2) in the tyre circumferential direction of each of the second recessed portions 17 is in the range of from 0.45 to 0.60 times the length (L1) in the tyre circumferential direction of each of the first recessed portions 16, for example. It is possible that the second recessed portions 17 configured as such improve uneven wear resistance performance and the wet performance in a good balance.

Fig. 4B is a cross-sectional view taken along B-B line of Fig. 3 and corresponds to a lateral cross-sectional view passing through one of the second recessed portions 17 provided in one of the first groove walls 11. As shown in Fig. 4B, each of the second recessed portions 17 has a flat surface 14 arranged between a deepest portion 28 thereof and a respective one of the groove edges (3e), for example. The second recessed portions 17 configured as such are helpful for improving the uneven wear resistance performance and the mold releasability.

It is preferred that an angle θ1 of the flat surface 14 of each of the second recessed portions 17 is in the range of from 5 to 15 degrees, for example. Note that the angle θ1 is an angle between each of the flat surfaces 14 and a tread normal line passing through a respective one of the groove edges (3e). It is possible that the second recessed portions 17 configured as such improve the uneven wear resistance performance and the wet performance after the tread portion 2 is worn in a good balance.

From the similar point of view, it is preferred that a maximum recess amount (w3) of each of the second recessed portions 17 is smaller than the maximum recess amount (w2) of each of the first recessed portions 16. Specifically, it is preferred that the maximum recess amount (w3) described above of each of the second recessed portions 17 is in the range of from 0.05 to 0.15 times the groove width (w1) of each of the main grooves 3.

As shown in Fig. 3, it is preferred that each of the first groove walls 11 in this embodiment is provided with the first recessed portions 16 and the second recessed portions 17 described above arranged alternately in the tyre circumferential direction. Thereby, the uneven wear of the groove edges of the main grooves 3 is further suppressed.

As with the first groove walls 11, each of the second groove walls 12 is provided with the recessed portions 15 described above. In a preferred embodiment, each of the second groove walls 12 is provided with a plurality of the first recessed portions 16 and a plurality of the second recessed portions 17. As a further preferred embodiment, each of the second groove walls 12 in this embodiment is provided with the first recessed portions 16 and the second recessed portions 17 arranged alternately in the tyre circumferential direction. Thereby, the uneven wear resistance performance and the wet performance after the tread portion is worn are improved in a good balance. Note that Fig. 4A is a lateral cross-sectional view of one of the second recessed portions 17 provided in one of the second groove walls 12 and Fig. 4B is a lateral cross-sectional view of one of the first recessed portions 16 provided in one of the second groove walls 12.

As shown in Fig. 3, in this embodiment, each of the first recessed portions 16 provided in one of the second groove walls 12 faces respective one of the second recessed portions 17 provided in one of the first groove walls 11 adjacent thereto, for example. Each of the second recessed portions 17 provided in one of the second groove walls 12 faces respective one of the first recessed portions 16 provided in one of the first groove walls 11 adjacent thereto, for example. Thereby, the first recessed portions 16 provided in one of the first groove walls 11 and the first recessed portions 16 provided in one of the second groove walls 12 adjacent thereto are arranged alternately in the tyre circumferential direction, for example. It is possible that the shoulder main grooves 4 configured as such have excellent mold releasability and suppress the air column resonance sound.

In each of the shoulder main grooves 4 and each of the crown main grooves 5, the first recessed portions 16 provided in the first groove wall 11 and the first recessed portions 16 provided in the second groove wall 12 are arranged alternately in the same phase with each other in the tyre circumferential direction. In other words, each of the first recessed portions 16 of the first groove wall 11 of each of the shoulder main grooves 4 is adjacent in the tyre axial direction to a respective one of the first recessed portions 16 provided in the first groove wall 11 of one of the crown main grooves 5 adjacent thereto. Similarly, each of the first recessed portion 16 provided in the second groove wall 12 of each of the shoulder main grooves 4 is adjacent in the tyre axial direction to a respective one of the first recessed portion 16 provided in the second groove wall 12 of one of the crown main grooves 5 adjacent thereto. Thereby, lateral rigidity of the land region defined between each of the shoulder main grooves 4 and a respective one of the crown main grooves 5 adjacent thereto is secured, therefore, excellent steering stability is exerted.

Each of the protruding portions 20 in this embodiment is provided in a region where a respective one of the first recessed portions 16 is projected outwardly in the tyre radial direction onto the ground contacting surface, for example. Further, none of the protruding portions 20 is provided in a region where each of the second recessed portions 17 is projected outwardly in the tyre radial direction. Thereby, a plurality of the protruding portions 20 are arranged in the tyre circumferential direction each in a region where a respective one of the recessed portions 15 is projected outwardly in the tyre radial direction. Further, the protruding portions 20 are arranged at the same interval as that of the first recessed portions 16.

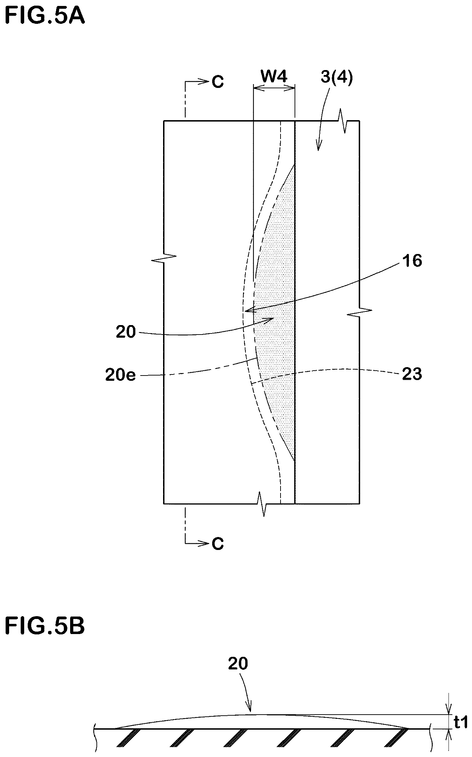

Fig. 5A is an enlarged plan view of one of the protruding portions 20. As shown in Fig. 5A, in a tread plan view, it is preferred that each of the protruding portions 20 has the same shape as that of each of the first recessed portions 16, for example. Thereby, in each of the protruding portions 20, a width thereof gradually decreases from a maximum width portion thereof toward both sides in the tyre circumferential direction. Therefore, the edge (20e) of each of the protruding portions 20 is curved in an arc shape, for example.

A width (w4) in the tyre axial direction of each of the protruding portions 20 is smaller than the groove width (w1) of each of the main grooves 3. Specifically, it is preferred that the width (w4) of each of the protruding portions 20 is in the range of from 0.80 to 1.20 times the maximum recess amount (w2) of each of the first recessed portions 16, for example. It is possible that the protruding portions 20 configured as such improve the uneven wear resistance performance while suppressing vibration during running.

Fig. 5B is a cross-sectional view taken along C-C line of Fig. 5A. As shown in Fig. 5B, it is preferred that a thickness of each of the protruding portions 20 gradually decreases from a portion having a maximum thickness (t1) toward both sides in the tyre circumferential direction, for example. Further, it is preferred that each of the protruding portions 20 has a smoothly curved outer surface in a cross section taken along the tyre circumferential direction. The protruding portions 20 configured as such are helpful for decreasing the vibration during running.

Furthermore, as shown in Fig. 4B, it is preferred that the thickness of each of the protruding portions 20 gradually decreases from the portion having the maximum thickness (t1) toward both sides in the tyre axial direction. It is preferred that each of the protruding portions 20 has the smoothly curved outer surface in a cross section taken along the tyre axial direction.

It is preferred that the maximum thickness (t1) of each of the protruding portion 20 is in the range of from 2.0% to 10.0% of a depth (d1) (shown in Fig. 2) of each of the main grooves, for example. It is possible that the protruding portions 20 configured as such improve the uneven wear resistance performance while decreasing the vibration during running.
while detailed description has been made of an embodiment of the present invention, the present invention can be embodied in various forms without being limited to the illustrated embodiment.

### Working Examples (Examples)

Pneumatic tyres of size 185/65R15 having the main grooves described above were made by way of test according to the specifications listed in Table 1. As Reference, tyres not provided with the protruding portions in the ground contacting surface were made by way of test. Note that the Reference and Example 1 had the same shape of the main grooves. Each of the test tyres was tested for the uneven wear resistance performance and the wet performance after the tyre was worn. Common specifications of the test tyres and the test methods were as follows.
Tyre rim: 15x6.0J
Tyre inner pressure: 220 kPa at front wheels, 210 kPa at rear wheels

### < Uneven Wear Resistance Performance >

The test tyres were mounted on four wheels of an FF passenger car with a displacement of 2000 cc, then, after running for a predetermined distance, a difference was measured between a maximum wear portion and a minimum wear portion of the groove edges of the main grooves. The results are indicated by an index based on the Reference being 100, wherein the smaller the numerical value, the more uniformly the groove edges were worn, which shows more excellent uneven wear resistance performance.

### < Wet Performance after Wear >

By using an inside drum testing machine, while the test tyres were run on the drum surface covered by 5.0 mm depth of water under the following conditions, the speed when the hydroplaning phenomenon occurred was measured. The results are indicated by an index based on the Reference being 100, wherein the larger the numerical value, the higher the measured speed, which shows more excellent wet performance.
Test tyre: tread portion was worn so that depth of main groove is 50% of that of new tyre
slip angle: 1.0 degree
vertical load: 4.2 kN

The test results are shown in Table 1.

**Table 1.**

| | Ref. | EX.1 | EX.2 | Ex.3 | Ex.4 | EX.5 | Ex.6 | EX.7 |
|---|---|---|---|---|---|---|---|---|
| Presence or Absence of Protruding portion | Absence | Presence | Presence | Presence | Presence | Presence | Presence | Presence |
| Recess amount (W2)/ Groove width (W1) of Main groove | 0.40 | 0.40 | 0.20 | 0.80 | 0.40 | 0.70 | 0.40 | 0.40 |
| Width (W4) of Protruding portion/ Recess amount (w2) of First recessed portion | - | 0.90 | 0.90 | 0.90 | 0.80 | 1.20 | 0.90 | 0.90 |
| Maximum thickness (t1) of Protruding portion/ Groove depth (d1) of Main groove [%] | - | 7.0 | 7.0 | 7.0 | 7.0 | 7.0 | 5.0 | 10.0 |
| Uneven wear resistance performance [index] | 100 | 83 | 80 | 92 | 87 | 81 | 89 | 82 |
| Wet performance after Wear [index] | 100 | 100 | 98 | 105 | 100 | 104 | 100 | 100 |

From the test results, it was confirmed that the uneven wear resistance performance and the wet performance after wear were improved for the tyres as the Examples.

## Claims

1. A tyre (1) comprising a tread portion (2) comprising a ground contacting surface (2s) and at least one main groove (3) recessed from the ground contacting surface (2s) and extending continuously in a tyre circumferential direction, wherein
at least one of the groove walls of the main groove (3) is provided with a recessed portion (15) recessed outwardly in a groove width direction from a corresponding groove edge (3e) of the main groove (3) on the ground contacting surface (2s), and
the ground contacting surface (2s) has a protruding portion (20) in a region where the recessed portion (15) is projected outwardly in a tyre radial direction,
**characterized in that**
a width (w4) in a tyre axial direction of the or each protruding portion (20) is smaller than a groove width (w1) of the main groove (3).

2. The tyre (1) according to claim 1, wherein
the recessed portion (15) is provided in each of the groove walls of the main groove (3).

3. The tyre (1) according to claim 1 or 2, wherein
the recessed portion (15) includes a first recessed portion (15, 16) in which a recess amount (w2) from the groove edge (3e) gradually decreases toward both sides in the tyre circumferential direction from a deepest portion (22) recessed most outwardly in the groove width direction.

4. The tyre (1) according to claim 3, wherein
the recessed portion (15) includes a second recessed portion (15, 17) in which a recess amount (w2) from the groove edge (3e) is constant in the tyre circumferential direction.

5. The tyre (1) according to claim 4, wherein
the recessed portion (15) includes a first recessed portion (15, 16) in which a recess amount (w2) from the groove edge (3e) gradually decreases toward both sides in the tyre circumferential direction from a deepest portion (22) recessed most outwardly in the groove width direction, and
the protruding portion (20) is provided in a region where the first recessed portion (15, 16) is projected outwardly in the tyre radial direction.

6. The tyre (1) according to any one of claims 1 to 5, wherein
a plurality of the protruding portions (20) is respectively provided in a plurality of the regions.

7. The tyre (1) according to claim 6, wherein
the protruding portions (20) are arranged in the tyre circumferential direction.

8. The tyre (1) according to any one of claims 1 to 7, wherein
a width (w4) in a tyre axial direction of the or each protruding portion (20) gradually decreases toward at least one side in the tyre circumferential direction.

## Patentansprüche

1. Reifen (1) mit einem Laufflächenabschnitt (2), der eine Bodenkontaktfläche (2s) und mindestens eine Hauptrille (3) umfasst, die von der Bodenkontaktfläche (2s) aus vertieft ist und sich kontinuierlich in einer Reifenumfangsrichtung erstreckt, wobei
mindestens eine der Rillenwände der Hauptrille (3) mit einem vertieften Abschnitt (15) versehen ist, der in einer Rillenbreitenrichtung von einer entsprechenden Rillenkante (3e) der Hauptrille (3) an der Bodenkontaktfläche (2s) nach außen vertieft ist, und
die Bodenkontaktfläche (2s) einen vorstehenden Abschnitt (20) in einem Bereich aufweist, in dem der vertiefte Abschnitt (15) in einer Reifenradialrichtung nach außen vorsteht,
**dadurch gekennzeichnet, dass**
eine Breite (W4) in einer Reifenaxialrichtung des oder jedes vorstehenden Abschnitts (20) kleiner ist als eine Rillenbreite (W1) der Hauptrille (3).

2. Reifen (1) nach Anspruch 1, wobei der vertiefte Abschnitt (15) in jeder der Rillenwände der Hauptrille (3) vorgesehen ist.

3. Reifen (1) nach Anspruch 1 oder 2, wobei der vertiefte Abschnitt (15) einen ersten vertieften Abschnitt (15, 16) umfasst, in dem ein Vertiefungsbetrag (W2) von der Rillenkante (3e) aus allmählich zu beiden Seiten in der Reifenumfangsrichtung von einem tiefsten Abschnitt (22) aus abnimmt, der in der Rillenbreitenrichtung am weitesten außen vertieft ist.

4. Reifen (1) nach Anspruch 3, wobei der vertiefte Abschnitt (15) einen zweiten vertieften Abschnitt (15, 17) umfasst, in dem ein Vertiefungsbetrag (W2) von der Rillenkante (3e) aus in der Reifenumfangsrichtung konstant ist.

5. Reifen (1) nach Anspruch 4, wobei
der vertiefte Abschnitt (15) einen ersten vertieften Abschnitt (15, 16) aufweist, in dem ein Vertiefungsbetrag (W2) von der Rillenkante (3e) allmählich zu beiden Seiten in der Reifenumfangsrichtung von einem tiefsten Abschnitt (22), der am weitesten außen in der Rillenbreitenrichtung vertieft ist, abnimmt, und
der vorstehende Abschnitt (20) in einem Bereich vorgesehen ist, in dem der erste vertiefte Abschnitt (15, 16) in der Reifenradialrichtung nach außen vorsteht.

6. Reifen (1) nach einem der Ansprüche 1 bis 5, wobei eine Vielzahl der vorstehenden Abschnitte (20) jeweils in einer Vielzahl der Bereiche vorgesehen ist.

7. Reifen (1) nach Anspruch 6, wobei die vorstehenden Abschnitte (20) in der Reifenumfangsrichtung angeordnet sind.

8. Reifen (1) nach einem der Ansprüche 1 bis 7, wobei eine Breite (W4) in einer Reifenaxialrichtung des oder jedes vorstehenden Abschnitts (20) allmählich zu mindestens einer Seite in der Reifenumfangsrichtung abnimmt.

## Revendications

1. Pneumatique (1) comprenant une portion formant bande de roulement (2) comprenant une surface de contact au sol (2s) et au moins une rainure principale (3) évidée par rapport à la surface de contact au sol (2s) et s'étendant en continu dans une direction circonférentielle du pneumatique, dans lequel
au moins une des parois de rainure de la rainure principale (3) est dotée d'une portion évidée (15) évidée vers l'extérieur dans une direction en largeur de la rainure depuis un bord de rainure correspondant (3e) de la rainure principale (3) sur la surface de contact au sol (2s), et
la surface de contact au sol (2s) a une portion en projection (20) dans une région où la portion évidée (15) est projetée vers l'extérieur dans une direction radiale du pneumatique,
**caractérisé en ce que**
une largeur (W4) dans une direction axiale du pneumatique de la ou de chaque portion en projection (20) est plus petite qu'une largeur de rainure (W1) de la rainure principale (3).

2. Pneumatique (1) selon la revendication 1, dans lequel
la portion évidée (15) est prévue dans chacune des parois de rainure de la rainure principale (3).

3. Pneumatique (1) selon la revendication 1 ou 2, dans lequel
la portion évidée (15) inclut une première portion évidée (15, 16) dans laquelle une quantité d'évidement (W2) depuis le bord de rainure (3e) diminue graduellement vers les deux côtés dans la direction circonférentielle du pneumatique depuis une portion la plus profonde (22) évidée le plus à l'extérieur dans la direction en largeur de la rainure.

4. Pneumatique (1) selon la revendication 3, dans lequel
la portion évidée (15) inclut une seconde portion évidée (15, 17) dans laquelle une quantité d'évidement (W2) depuis le bord de rainure (3e) est constante dans la direction circonférentielle du pneumatique.

5. Pneumatique (1) selon la revendication 4, dans lequel
la portion évidée (15) inclut une première portion évidée (15, 16) dans laquelle une quantité d'évidement (W2) depuis le bord de rainure (3e) diminue graduellement vers les deux côtés dans la direction circonférentielle du pneumatique depuis une portion la plus profonde (22) évidée le plus à l'extérieur dans la direction en largeur de la rainure, et
la portion en projection (20) est prévue dans une région où la première portion évidée (15, 16) est projetée vers l'extérieur dans la direction radiale du pneumatique.

6. Pneumatique (1) selon l'une quelconque des revendications 1 à 5, dans lequel
une pluralité des portions en projection (20) sont respectivement prévues dans une pluralité des régions.

7. Pneumatique (1) selon la revendication 6, dans lequel
les portions en projection (20) sont agencées dans la direction circonférentielle du pneumatique.

8. Pneumatique (1) selon l'une quelconque des revendications 1 à 7, dans lequel
une largeur (W4) dans une direction axiale du pneumatique de la ou de chaque portion en projection (20) diminue graduellement vers au moins un côté dans la direction circonférentielle du pneumatique.
